# EUROPEAN PATENT SPECIFICATION

(11) **EP 3 416 151 B1**
(45) Date of publication and mention of the grant of the patent: **24.04.2024**
(21) Application number: 17176173.7
(22) Date of filing: 15.06.2017
(51) Int. Cl.: G08G 1/01, G08G 1/04, G08G 1/0967, H04W 4/06, H04W 84/00, H04W 84/18

(54) **DETECTION OF NON-V2V VEHICLES**
NACHWEIS VON NICHT-V2V-FAHRZEUGEN
DÉTECTION DE VÉHICULES NON-V2V

(43) Date of publication of application: 19.12.2018
(73) Proprietor: Arriver Software AB, 583 30 Linköping (SE)
(72) Inventor: FULL, Markus, 85757 Karlsfeld (DE); BOESWIRTH, Reinhard, 85241 Hebertshausen (DE)
(74) Representative: Loveless, Ian Mark

(56) References cited:
- WO-A1-2011/089641
- US-A1- 2002 198 660
- US-A1- 2009 248 284
- US-A1- 2009 309 757
- US-A1- 2013 138 320
- US-A1- 2017 025 001

## Description

### TECHNICAL FIELD

Embodiments presented herein relate to a method and a system for detection of a target vehicle without vehicle-to-vehicle capability.

### BACKGROUND

In general terms, vehicular communication systems are networks in which vehicles and roadside units are the communicating nodes, providing each other with information. Examples of information include, but are not limited to, safety warnings and traffic information. The use of vehicular communication systems can be used for accurate detection of vehicles and thus be effective in avoiding accidents and traffic congestion.

In general terms, vehicle-to-vehicle (V2V) is an automobile technology designed to allow vehicles equipped with V2V systems to communicate with each other, thus enabling vehicular communication. V2V systems can thus be regarded as forming a wireless ad hoc network. Such networks are also referred to as vehicular ad hoc networks (VANETs).

US 20160133128 A1 relates to a system and a method for correcting position information of a surrounding vehicle, which provide accurate position information of a surrounding vehicle by correcting the position information of the surrounding vehicle received through V2V communication, and identifies a license-plate number of a front vehicle through a sensor mounted in a vehicle, calculates a position of the front vehicle, and compare position information, which is included in information including the identified number of the front vehicle in information received from the surrounding vehicle, with the calculated position of the front vehicle to correct the position information of the surrounding vehicle.

However, it might be assumed that not all vehicles are equipped with V2V systems and thus not all vehicles might be capable of V2V communications, which thus could make the use of V2V communications useless.

Hence, there is still a need for accurate detection of vehicles.

US 2009/248284 A1 discloses a system comprising an electronic control unit for detection of a target vehicle without vehicle-to-vehicle, V2V, capability and a traffic information collecting center, the electronic control unit comprising: an obtain module configured to obtain sensor data from at least one on-board sensor of an ego vehicle, the sensor data indicating presence of the target vehicle within sensing range of the at least one on-board sensor; a determine module configured to determine that the target vehicle is without V2V capability by comparing the sensor data to output data from a V2V system of the ego vehicle; a further determine module configured to determine, based on the sensor data and on current positioning data of the ego vehicle, fusion data representing at least one of current position, current direction and current speed of the target vehicle; and a transmit module configured to wirelessly transmit the fusion data of the target vehicle.

### SUMMARY

An object of embodiments herein is to provide efficient detection of vehicles without V2V capability. The invention is defined in the claims to which reference is directed.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating an ego vehicle and a target vehicle according to embodiments;
Fig. 2 is a schematic diagram illustrating the ego vehicle as part of a communications network according to embodiments;
Fig. 3 is a flowchart of methods according to embodiments;
Fig. 4 is a schematic diagram showing functional units of an electronic control unit according to an embodiment;
Figs. 5 and 6 are schematic diagrams showing functional modules of an electronic control unit according to claimed and respectively non claimed embodiments; and
Fig. 7 shows one example of a computer program product comprising computer readable storage medium according to a non claimed embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

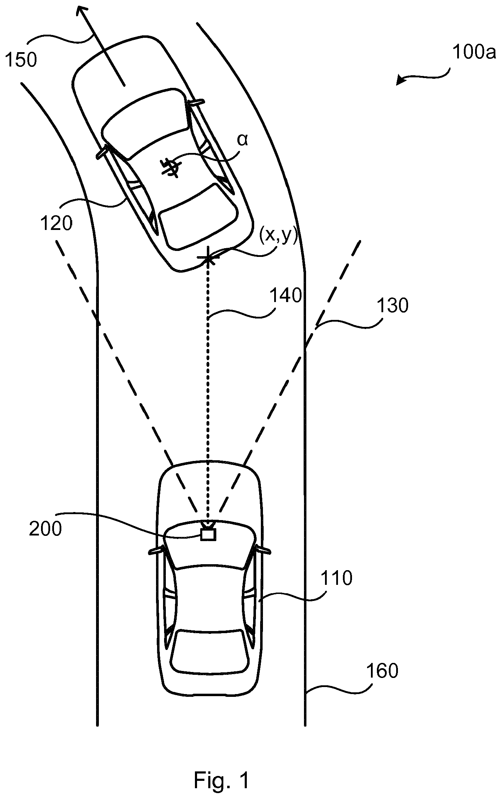

Fig. 1 is a schematic diagram 100a illustrating a top view of an ego vehicle 110 and a target object 120. The ego vehicle 110 and the target object 120 are travelling along a path 160. Hereinafter the target object will be represented by a target vehicle and hence the terms target object and target vehicle can be used interchangeably.

The ego vehicle 110 comprises an electronic control unit 200. The electronic control unit 200 comprises, is co-located with, or is operatively connected to, an on-board sensor. The on-board sensor is configured to capture sensor data within a sensing range 130. Examples of on-board sensors will be provided below.

The target vehicle 120 is assumed to be located at a position (x, y) at a distance 140 from the on-board sensor. The target vehicle 120 is assumed to be travelling in a direction defined by the pose 150 of the target vehicle 120 with a yaw rate α, where the yaw rate is defined by the target vehicle's 120 angular velocity around its vertical axis.

It is assumed that the ego vehicle 110 has V2V capability. That is, the ego vehicle 110 comprises its own V2V system 240. The electronic control unit 200 is configured to determine whether the target vehicle 120 has V2V capability or not, i.e. whether the target vehicle 120 comprises its own V2V system. How to make such a determination will be disclosed below.

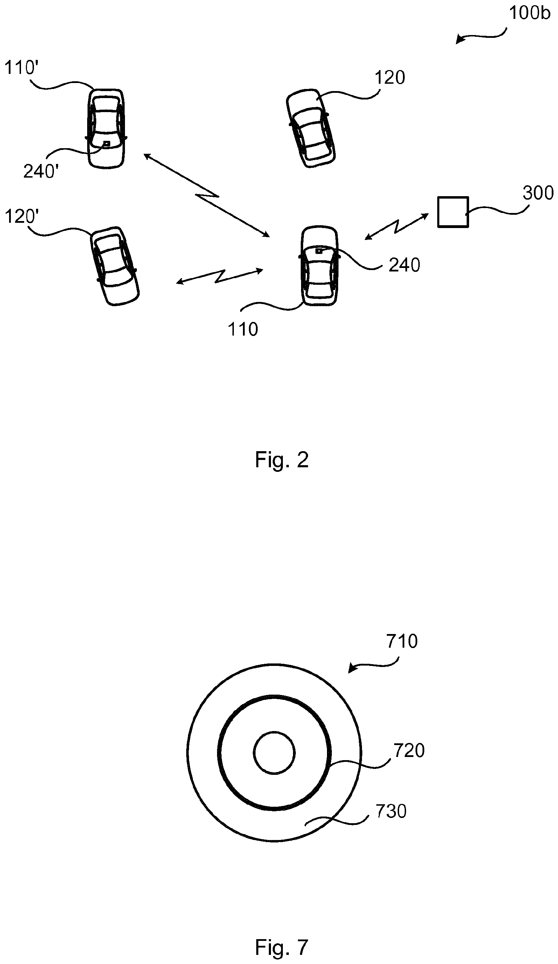

Fig. 2 is a schematic diagram 100b illustrating a top view of the ego vehicle 110 as part of a communications network. In some aspects the communications network is part of a vehicular communication system. The communications network further comprises a traffic information collecting center 300, at least one other vehicle 110' with V2V capability and at least one other vehicle 120' without V2V capability. The vehicle 110' thus comprises its own V2V system 240'. Possible communications links for wireless transmission to, and reception from, the ego vehicle 110 are indicated by zigzag arrows. Other possible communications links have been left out for clarity and in order not to obscure the disclosure of the present invention. In this respect, the communications link between vehicle 110 and vehicle 110' is a direct communications link that uses V2V communications, whereas the communications link between vehicle 110 and vehicle 120' as well as the communications link between vehicle 110 and traffic information collecting center 300 are communications links in a cellular network or wireless local area network. Network nodes (such as radio access network nodes and core network nodes), devices, and other functional units of the cellular network have been omitted in order not to obscure the disclosure of the present invention.

The embodiments disclosed herein relate to mechanisms for detection of a target vehicle 120 without V2V capability. In order to obtain such mechanisms there is provided an electronic control unit 200, a method performed by the electronic control unit 200, a computer program product comprising code, for example in the form of a computer program, that when run on an electronic control unit 200, causes the electronic control unit 200 to perform the method.

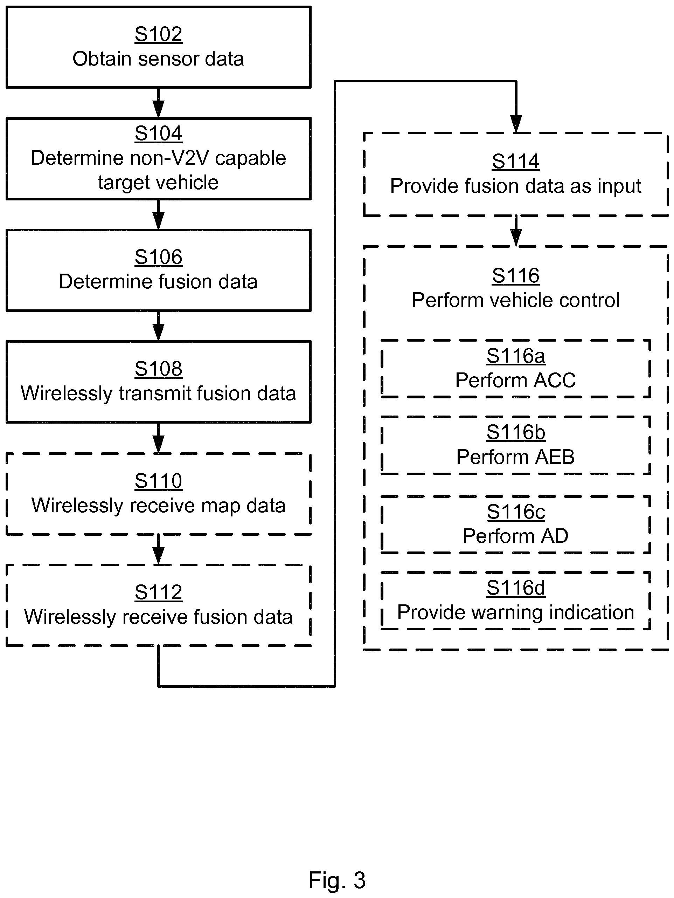

Reference is now made to Fig. 3 illustrating methods for detection of a target vehicle 120 without V2V capability as performed by the electronic control unit 200 according to embodiments.

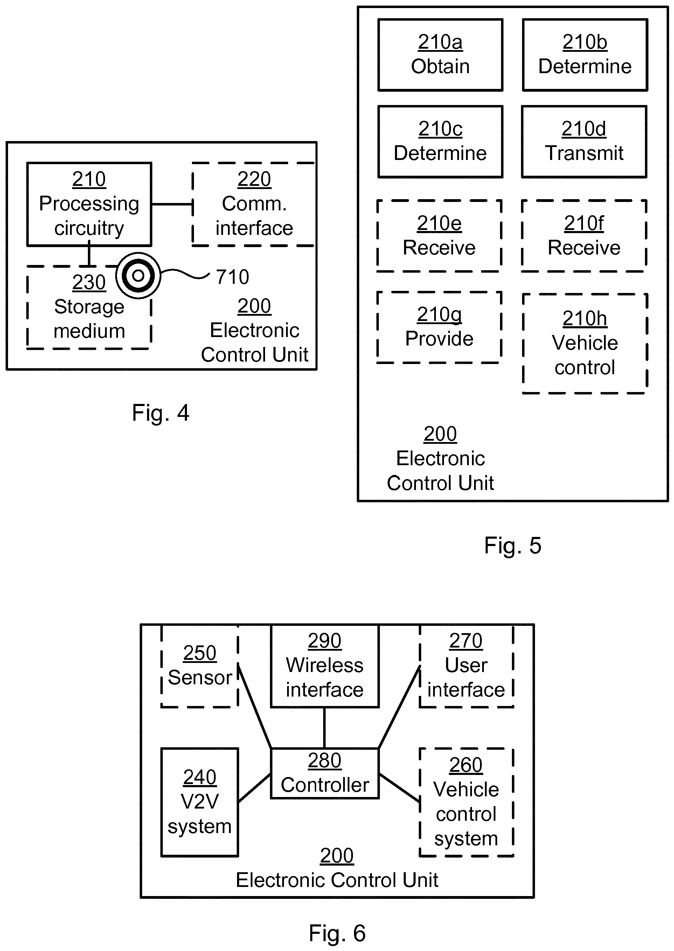

It is assumed that sensor data is collected by at least one on-board sensor 250 (see, Fig. 6 below) of the ego vehicle 110. This sensor data is used as input to the electronic control unit 200. Hence, the electronic control unit 200 is configured to perform step S102:
S102: The electronic control unit 200 obtains sensor data from at least one on-board sensor 250 of the ego vehicle 110. It is assumed that the sensor data indicates presence of the target vehicle 120 within the sensing range 130 of the at least one on-board sensor 250.

The electronic control unit 200 determines whether the target vehicle 120 has V2V capability or not. For the present disclosure it is assumed that the target vehicle 120 is without V2V capability. Hence, the electronic control unit 200 is configured to perform step S104:
S104: The electronic control unit 200 determines that the target vehicle 120 is without V2V capability. This is determined by the electronic control unit 200 comparing the sensor data to output data from the V2V system 240 of the ego vehicle 110.

In other words, since the sensor data indicates presence of the target vehicle 120 it is assumed that there thus is presence of a target vehicle 120 in accordance with the sensor data. Now, if the target vehicle 120 indeed has V2V capability, this would be indicated by the V2V system 240 of the ego vehicle 110 also being able to detect the target vehicle 120. But in the present case it is assumed that the V2V system 240 of the ego vehicle 110 does not detect any indication of presence of the target vehicle 120. There is thus a mismatch between the sensor data and the output data from the V2V system 240. Hence, in absence of detection of presence of the target vehicle 120 by the V2V system 240 it can thus be determined that the target vehicle 120 is without V2V capability.

With knowledge of the position of the ego vehicle 110 and position, direction, and/or speed of the of the target vehicle 120, the electronic control unit 200 could determine and simulate the actual position of the target vehicle 120. Particularly, the electronic control unit 200 is configured to perform step S106:
S106: The electronic control unit 200 determines, based on the sensor data and on current positioning data of the ego vehicle 110, fusion data of the target vehicle 120. The fusion data represents current position, current direction, and/or current speed of the target vehicle 120.

The fusion data is then provided to the traffic information collecting center 300. Particularly, the electronic control unit 200 is configured to perform step S108:
S108: The electronic control unit 200 wirelessly transmits the fusion data of the target vehicle 120. This enables the electronic control unit 200 to simulate the actual position of the target vehicle 120.

Examples of how the electronic control unit 200 wirelessly transmits the fusion data and to what entities the electronic control unit 200 wirelessly transmits the fusion data will be disclosed below.

Embodiments relating to further details of detection of a target vehicle 120 without V2V capability as performed by the electronic control unit 200 will now be disclosed.

There could be different ways to define the positioning data of the ego vehicle 110. In some aspects the positioning data of the ego vehicle 110 is defined by position, direction, and/or speed of the ego vehicle 110. That is, according to an embodiment the positioning data of the ego vehicle 110 comprises at least one of current position, current direction, and current speed of the ego vehicle 110.

As disclosed above, the electronic control unit 200 is enabled to simulate the actual position of the of the target vehicle 120. With further respect thereto, the electronic control unit 200 could be configured to determine the global positioning system (GPS) position of the target vehicle 120 using its own GPS position. Particularly, according to an embodiment the current positioning data of the ego vehicle 110 is GPS data, and the fusion data comprises GPS data representing the current position of the target vehicle 120.

There may be different examples of intended recipients of the fusion data wirelessly transmitted by the electronic control unit 200.

In some aspects the fusion data is wirelessly transmitted to another vehicle 110' with V2V capability. Hence, according to an embodiment the fusion data is wirelessly transmitted using the V2V system 240 to another vehicle 110' comprising its own V2V system 240'. The vehicle 110' with V2V capability is thereby enabled to receive warnings as well as other information about vehicles 120 without V2V capability.

The fusion data could be wirelessly transmitted using Vehicle-to-Infrastructure (VTI) communication, vehicle-to-device (V2D) communication, vehicle-to-grid (V2G) communication, or other means for communications, such as regular cellular communications or wireless local area network communications. In some aspects the fusion data is thus wirelessly transmitted over a cellular network or wireless local area network. The fusion data could then be wirelessly transmitted to another vehicle 120' without V2V capability or to the traffic information collecting center 300. Hence, according to an embodiment the fusion data is wirelessly transmitted using a cellular network radio technology or a wireless local area network radio technology to another vehicle 120' without V2V capability and/or to the traffic information collecting center 300. The vehicle 120' without V2V capability is thereby enabled to receive warnings as well as other information about vehicles 120 without V2V capability. Further, the information collecting center 300 is thereby enabled to receive information about vehicles 120 without V2V capability that can be used for real-time traffic analysis.

The traffic information collecting center 300 uses the fusion data in order to create map data. Further, receiving fusion data for one and the same target vehicle 120 from more than one vehicle 110 enables the measurement accuracy of the position coordinates of the target vehicle 120 in the map data to be improved. One reason for this is that the measurement errors are reduced by the use of crowd sourced data, i.e. when fusion data of the same target vehicle 120 is received from different vehicles 110, 110'.

The map data could describe the instantaneous traffic situation. Thus, such map data could be used in an automotive navigation system. As the skilled person understands there are different ways to create map data from fusion data representing current position, current direction, and/or current speed of the target vehicle 120.

The thus created map data is then downloaded to the electronic control unit 200. Hence, the electronic control unit 200 is configured to perform step S110:
S110: The electronic control unit 200 wirelessly receives map data from the traffic information collecting center 300. The map data comprises positioning information of the target vehicle 120. The positioning data of the target vehicle 120 is based on the fusion data as wirelessly transmitted by the electronic control unit 200.

It is understood that the map data could comprise positioning information of a plurality of vehicles 120, 120' without V2V capability as well as positioning information of a plurality of vehicles 110, 110' with V2V capability in addition to ordinary map data, such as navigation information, geographic information, and infrastructure information, etc. The map data could thus by the electronic control unit 200 be used for navigation purposes but also as input to a vehicle control system (see, below).

The map data of the target vehicle 120 represents a refinement of the fusion data wirelessly transmitted to the traffic information collecting center 300 (cf. the use of crowd sourced data above). Such refinement could be provided as differential data, i.e. as a difference to the fusion data wirelessly transmitted to the traffic information collecting center 300. This could enable the map data only to require a very low bandwidth in order to be wirelessly received by the electronic control unit 200. This could allow the map data to be delivered in near real-time and thus be suitable as input to the vehicle control system.

Further, since the electronic control unit 200 could, for example via its V2V system 240, wirelessly transmit the fusion data of the target vehicle 120 to another vehicle 110' it could be equally so that the electronic control unit 200, for example via its V2V system 240, wirelessly receives fusion data of another target vehicle 120' from another vehicle 110'. Hence, according to an embodiment the electronic control unit 200 is configured to perform step S112:
S112: The electronic control unit 200 wirelessly receives fusion data of another target vehicle 120' from another vehicle 110'.

In some aspects the fusion data is received using V2V communications with the vehicle 110' and the target vehicle 120' is without V2V capability. Although the target vehicle 120 has been illustrated as a car, the target vehicle 120 could be any type of motorized or un-motorized vehicle. According to an embodiment the sensor data is therefore used as input to an object classifier. The object classifier is configured to classify the target vehicle 120 into a target object class. The target object class is selected from a set of target object classes. Each target object class is associated with its own label. The fusion data could then comprise the label of the target object class (as selected according to the object classification). Examples of target object classes and labels include, but are not limited to, cars, lorries, trucks, motorcycles, bicycles (including its driver), horses (including its rider), and horse carriages.

There could be different types of on-board sensors 250 from which the sensor data is obtained. Examples of the at least one on-board sensor 250 include, but are not limited to, radar based sensors, camera based sensors, Light Detection and Ranging (LIDAR) based sensors, and ultra high frequency (UHF) radio based sensors.

The sensor data as obtained from two different types of on-board sensors 250 could then be provided to the electronic control unit 200 as combined data. That is, according to an embodiment the sensor data is obtained as combined sensor data from at least two on-board sensors 250 of different type.

Thus, the sensed data from any available on-board sensors 250 could be taken in account in order to determine the fusion data in step S106. This could enable all of the advantages of the individual on-board sensors 250 to be achieved whilst at the same time avoiding, or at least mitigating, at least some, if not all, of the disadvantages of the on-board sensors 250. This is true since one on-board sensor 250 of a particular type could compensate for the disadvantages of another on-board sensor 250 of another particular type. As an example, fusion data determined from a combination of image data from a camera based sensor and radar data from a radar based sensor has the advantage of having a very accurate object classification (as enabled by the camera based sensor) and very accurate distance measurement with time-of-flight principle as well as accurate speed information via the Doppler principle (as enabled by the radar based sensor).

There are different operations that the electronic control unit 200 can be configured to perform once having determined the fusion data of the target vehicle 120 as in step S106. For example, the fusion data of the target vehicle 120 could be used as input to a vehicle control system. Hence, according to an embodiment the electronic control unit 200 is configured to perform step S114:
S114: The electronic control unit 200 provides the fusion data as input to at least one vehicle control system.

Further, as disclosed above, also map data received from the traffic information collecting center 300, and especially such map data comprising fusion data of another target vehicle 120' could be used as input to the at least one vehicle control system.

According to some embodiments the at least one vehicle control system is part of, or at least controlled by, the electronic control unit 200. Hence, according to an embodiment the electronic control unit 200 is configured to perform step S116:
S116: The electronic control unit 200 performs vehicle control using the at least one vehicle control system and based on the fusion data.

There are different examples of vehicle control systems. For example, the vehicle control system could be an Adaptive Cruise Control (ACC) system, an Automatic Emergency Braking (AEB) system, or an Autonomous Driving (AD) system.

Hence, according to an embodiment the electronic control unit 200 is configured to perform at least one of steps S116a, S116b, and S116c as part of step S116:
S116a: The electronic control unit 200 performs Adaptive Cruise Control (ACC). The electronic control unit 200 is thereby configured to adjust the speed of the ego vehicle 110 to maintain a safe distance to the target vehicle 120.

S116b: The electronic control unit 200 performs Automatic Emergency Braking (AEB). The electronic control unit 200 is thereby configured to control a braking system of the ego vehicle 110 to avoid collision with the target vehicle 120.

Sn6c: The electronic control unit 200 performs Autonomous Driving (AD). The electronic control unit 200 is thereby configured to control navigation of the ego vehicle 110 without human input.

Any given step of steps S116a-S116c could be combined with at least one other step of steps S116a-S116c.

Additionally or alternatively, the electronic control unit 200 is configured to provide warnings (such as sounds or visual alerts) to a driver of the ego vehicle 110. Hence, according to an embodiment the electronic control unit 200 is configured to perform step S116d as part of step S116.

S116d: The electronic control unit 200 provides a warning indication to a user interface.

Step S116d could be combined with any of step S116a-S116c.

Fig. 4 schematically illustrates, in terms of a number of functional units, the components of an electronic control unit 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 230. The processing circuitry 210 may further be provided as at least one application specific integrated circuit (ASIC), or field programmable gate array (FPGA).

Particularly, the processing circuitry 210 is configured to cause the electronic control unit 200 to perform a set of operations, or steps, S102-S116, as disclosed above. For example, the storage medium 230 may store the set of operations, and the processing circuitry 210 may be configured to retrieve the set of operations from the storage medium 230 to cause the electronic control unit 200 to perform the set of operations. The set of operations maybe provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The electronic control unit 200 may further comprise a communications interface 220 at least configured for communications with vehicles 110', 120' and the traffic information collecting center 300. As such the communications interface 220 may comprise one or more transmitters and receivers, comprising analogue and digital components. The communications interface 220 is capable of V2V communications as well as at least one of wireless cellular network communications and wireless local area network communications.

The processing circuitry 210 controls the general operation of the electronic control unit 200 e.g. by sending data and control signals to the communications interface 220 and the storage medium 230, by receiving data and reports from the communications interface 220, and by retrieving data and instructions from the storage medium 230. Other components, as well as the related functionality, of the electronic control unit 200 are omitted in order not to obscure the concepts presented herein.

Fig. 5 schematically illustrates, in terms of a number of functional modules, the components of an electronic control unit 200 according to an embodiment. The electronic control unit 200 of Fig. 5 comprises a number of functional modules; an obtain module 210a configured to perform step S102, a determine module 210b configured to perform step S104, a determine module 210c configured to perform step S106, a transmit module 210d configured to perform step S108 and a receive module 210e configured to perform step S110.

The electronic control unit 200 of Fig. 5 may further comprise a number of optional functional modules, such as any of a receive module 210f configured to perform step S112, a provide module 210g configured to perform step S114, and a vehicle control module 210h configured to perform step S116 8including steps S116a-S116d.

In general terms, each functional module 210a-210h may in one embodiment be implemented only in hardware and in another embodiment with the help of software, i.e., the latter embodiment having computer program instructions stored on the storage medium 230 which when run on the processing circuitry makes the electronic control unit 200 perform the corresponding steps mentioned above in conjunction with Fig 5. It should also be mentioned that even though the modules correspond to parts of a computer program, they do not need to be separate modules therein, but the way in which they are implemented in software is dependent on the programming language used. Preferably, one or more or all functional modules 210a-210h may be implemented by the processing circuitry 210, possibly in cooperation with the communications interface 220 and/or the storage medium 230. The processing circuitry 210 may thus be configured to from the storage medium 230 fetch instructions as provided by a functional module 210a-210h and to execute these instructions, thereby performing any steps as disclosed herein.

Fig. 6 schematically illustrates, in terms of a number of functional modules, the components of an electronic control unit 200 according to an embodiment not falling under the scope of the claims.

The electronic control unit 200 of Fig. 6 comprises a V2V system 240. The V2V system 240 is configured for performing V2V communications. In this respect the V2V system 240 may implement functionality of the determine module 210b (partly), the transmit module 210d, and the receive module 210f, and hence be configured to perform steps S104 (partly), S108, S112. The electronic control unit 200 of Fig. 6 optionally comprises an on-board sensor 250. Alternatively, the on-board sensor 250 could be operatively connected to the electronic control unit 200. The on-board sensor 250 is configured to sense data and to provide the sensed data as input to a controller 280. Examples of different types of on-board sensor 250 have been provided above.

The controller 280 is configured to obtain the sensor data from the on-board sensor 250 and to receive data from the V2V system 240. In this respect the controller 280 may implement functionality of the determine module 210b (partly), the determine module 210c, and the provide module 210g, and hence be configured to perform steps S104 (partly), S106, S114.

The electronic control unit 200 of Fig. 6 comprises a wireless interface 290 configured to wirelessly transmit and receive data. In this respect the wireless interface 290 may implement functionality of the transmit module 210d, the receive module 210e, and the receive module 210f, and hence be configured to perform steps S108, S110, S112.

The electronic control unit 200 of Fig. 6 optionally comprises a vehicle control system 260. Alternatively, the vehicle control system 260 could be operatively connected to the electronic control unit 200. The vehicle control system 260 is configured to obtain the fusion data from the controller 280 and then perform vehicle control. The vehicle control system 260 is thus configured to implement functionality of the vehicle control module 210h by performing ACC, AEB, and/or AD and hence be configured to perform any of steps S116, S116a, S116b, and S116c.

The electronic control unit 200 of Fig. 6 optionally comprises a user interface 270. Alternatively, the user interface 270could be operatively connected to the electronic control unit 200. The controller 280 can then be configured to provide a warning indication to the user interface 270 and hence be configured to perform step Sn6d.

The electronic control unit 200 may be provided as a standalone device or as a part of at least one further device. For example, although the electronic control unit 200 in Fig. 6 has been illustrated as (optionally) comprising a vehicle control system 260, the electronic control unit 200 may be provided as part of the vehicle control system 260 or as part of the V2V system 240. The same applies to the functional modules 210a-210h of Fig. 5 and the computer program 720 of Fig. 7 (see below).

Further, the electronic control unit 200 can be part of an automotive vehicle, as defined by the ego vehicle 110. Hence, according to a non claimed embodiment there is provided a vehicle 110 comprising an electronic control unit 200 as herein disclosed.

Fig. 7 shows one example of a computer program product 710 comprising computer readable storage medium 730. On this computer readable storage medium 730, a computer program 720 can be stored, which computer program 720 can cause the processing circuitry 210 and thereto operatively coupled entities and devices, such as the communications interface 220 and the storage medium 230, to execute methods according to non claimed embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for detection of a target vehicle (120) without vehicle-to-vehicle, V2V, capability, the method comprising the following steps performed by an electronic control unit (200) of an ego vehicle:
obtaining (S102) sensor data from at least one on-board sensor (250) of the ego vehicle (110), the sensor data indicating presence of the target vehicle (120) within sensing range of the at least one on-board sensor (250);
determining (S104) that the target vehicle (120) is without V2V capability by comparing the sensor data to output data from a V2V system (240) of the ego vehicle (110);
determining (S106), based on the sensor data and on current positioning data of the ego vehicle (110), fusion data representing at least one of current position, current direction and current speed of the target vehicle (120);
wirelessly transmitting (S108) the fusion data of the target vehicle (120) to a traffic information collecting center (300); and
wirelessly receiving (S110) map data from the traffic information collecting center (300), the map data comprising positioning information of the target vehicle (120), the positioning data of the target vehicle (120) being computed by the traffic information collecting center (300) based on the fusion data as wirelessly transmitted by the electronic control unit (200).

2. The method according to claim 1, wherein the fusion data is wirelessly transmitted using the V2V system (240) to another vehicle (110') comprising its own V2V system (240').

3. The method according to claim 1, wherein the fusion data is wirelessly transmitted using a cellular network radio technology or a wireless local area network radio technology to the traffic information collecting center (300) and optionally to another vehicle (120') without V2V capability

4. The method according to claim 1, wherein the current positioning data of the ego vehicle (110) is global positioning system, GPS, data, and wherein the fusion data comprises GPS data representing the current position of the target vehicle (120).

5. The method according to claim 1, wherein the sensor data is used as input to an object classifier that classifies the target vehicle (120) into a target object class selected from a set of target object classes, each of which is associated with its own label, and wherein the fusion data comprises the label of the target object class.

6. The method according to claim 1, wherein the sensor data is obtained as combined sensor data from at least two on-board sensors (250) of different type.

7. The method according to claim 1, wherein the at least one on-board sensor (250) is a radar based sensor, camera based sensor, a Light Detection and Ranging based sensor, or an ultra high frequency radio based sensor.

8. The method according to claim 1, wherein the positioning data of the ego vehicle (110) comprises at least one of current position, current direction and current speed of the ego vehicle (110).

9. The method according to claim 1, further comprising:
wirelessly receiving (S112) fusion data of another target vehicle (120') from another vehicle (110').

10. The method according to claim 1, further comprising:
providing (S114) the fusion data as input to at least one vehicle control system (260); and
performing (S116) vehicle control using the at least one vehicle control system (260) and based on the fusion data.

11. The method according to claim 11, wherein performing vehicle control comprises at least one of:
performing (S116a) Adaptive Cruise Control (ACC);
performing (S116b) Automatic Emergency Braking (AEB);
performing (S116c) Autonomous Driving (AD); and/or
providing (S116d) a warning indication of the target vehicle (120) to a user interface of the ego vehicle (110).

12. A system comprising an electronic control unit (200) for detection of a target vehicle (120) without vehicle-to-vehicle, V2V, capability, and a traffic information collecting center, the electronic control unit (200) comprising:
an obtain module (210a) configured to obtain sensor data from at least one on-board sensor (250) of an ego vehicle (110), the sensor data indicating presence of the target vehicle (120) within sensing range of the at least one on-board sensor (250);
a determine module (210b) configured to determine that the target vehicle (120) is without V2V capability by comparing the sensor data to output data from a V2V system (240) of the ego vehicle (110);
a further determine module (210c) configured to determine, based on the sensor data and on current positioning data of the ego vehicle (110), fusion data representing at least one of current position, current direction and current speed of the target vehicle (120); and
a transmit module (210d) configured to wirelessly transmit the fusion data of the target vehicle (120) to the traffic information collecting center,
a receive module (210e) configured to wirelessly receive map data from the traffic information collecting center (300), the map data comprising positioning information of the target vehicle (120), wherein the traffic information collecting center is configured to compute the positioning data of the target vehicle (120) based on the fusion data as wirelessly transmitted by the electronic control unit (200).

## Patentansprüche

1. Verfahren zum Erkennen eines Zielfahrzeugs (120) ohne V2V-(Vehicle-to-Vehicle)-Fähigkeit, wobei das Verfahren die folgenden von einer elektronischen Steuereinheit (200) eines Ego-Fahrzeugs durchgeführten Schritte beinhaltet:
Erhalten (S102) von Sensordaten von mindestens einem Bordsensor (250) des Ego-Fahrzeugs (110), wobei die Sensordaten das Vorhandensein des Zielfahrzeugs (120) innerhalb des Erfassungsbereichs des mindestens einen Bordsensors (250) anzeigen;
Feststellen (S104), dass das Zielfahrzeug (120) ohne V2V-Fähigkeit ist, durch Vergleichen der Sensordaten mit Ausgangsdaten von einem V2V-System (240) des Ego-Fahrzeugs (110) ;
Bestimmen (S106), auf der Basis der Sensordaten und von aktuellen Positionierungsdaten des Ego-Fahrzeugs (110), von Fusionsdaten, die mindestens eines von aktueller Position, aktueller Richtung und aktueller Geschwindigkeit des Zielfahrzeugs (120) darstellen;
drahtloses Übertragen (S108) der Fusionsdaten des Zielfahrzeugs (120) zu einer Verkehrsinformationssammelzentrale (300); und
drahtloses Empfangen (S110) von Kartendaten von der Verkehrsinformationssammelzentrale (300), wobei die Kartendaten Positionsinformationen des Zielfahrzeugs (120) umfassen, wobei die Positionsdaten des Zielfahrzeugs (120) von der Verkehrsinformationssammelzentrale (300) auf der Basis der Fusionsdaten wie drahtlos von der elektronischen Steuereinheit (200) übertragen berechnet werden.

2. Verfahren nach Anspruch 1, wobei die Fusionsdaten mittels des V2V-Systems (24o) drahtlos zu einem anderen Fahrzeug (110) mit eigenem V2V-System (240) übertragen werden.

3. Verfahren nach Anspruch 1, wobei die Fusionsdaten mit einer Funktechnologie eines Mobilfunknetzwerks oder einer Funktechnologie eines drahtlosen lokalen Netzwerks drahtlos zur Verkehrsinformationssammelstelle (300) und optional zu einem anderen Fahrzeug (120) ohne V2V-Fähigkeit übertragen werden.

4. Verfahren nach Anspruch 1, wobei die aktuellen Positionsdaten des Ego-Fahrzeugs (110) GPS-(Global Positioning System)-Daten sind, und wobei die Fusionsdaten GPS-Daten umfassen, die die aktuelle Position des Zielfahrzeugs (120) darstellen.

5. Verfahren nach Anspruch 1, wobei die Sensordaten als Eingabe in einen Objektklassifizierer verwendet werden, der das Zielfahrzeug (120) in eine aus einem Satz von Zielobjektklassen ausgewählte Zielobjektklasse klassifiziert, von denen jede mit ihrem eigenen Label assoziiert ist, und wobei die Fusionsdaten das Label der Zielobjektklasse umfassen.

6. Verfahren nach Anspruch 1, wobei die Sensordaten als kombinierte Sensordaten von mindestens zwei Bordsensoren (250) unterschiedlichen Typs erhalten werden.

7. Verfahren nach Anspruch 1, wobei der mindestens eine Bordsensor (250) ein radargestützter Sensor, ein kameragestützter Sensor, ein auf Lichterkennung und Entfernungsmessung gestützter Sensor oder ein auf Ultrahochfrequenzfunk gestützter Sensor ist.

8. Verfahren nach Anspruch 1, wobei die Positionsdaten des Ego-Fahrzeugs (110) mindestens eines von einer aktuellen Position, aktuellen Richtung und aktuellen Geschwindigkeit des Ego-Fahrzeugs (110) umfassen.

9. Verfahren nach Anspruch 1, das ferner Folgendes beinhaltet:
drahtloses Empfangen (S112) von Fusionsdaten eines anderen Zielfahrzeugs (120') von einem anderen Fahrzeug (110').

10. Verfahren nach Anspruch 1, das ferner Folgendes beinhaltet:
Bereitstellen (S114) der Fusionsdaten als Eingabe in mindestens ein Fahrzeugsteuersystem (260); und
Durchführen (S116) von Fahrzeugsteuerung mit Hilfe des mindestens einen Fahrzeugsteuersystems (260) und auf der Basis der Fusionsdaten.

11. Verfahren nach Anspruch 11, wobei die Durchführung von Fahrzeugsteuerung mindestens eines beinhaltet von:
Durchführen (S116a) von adaptiver Geschwindigkeitsregelung (ACC);
Durchführen (S116b) einer automatischen Notbremsung (AEB) ;
Durchführen (S116c) von autonomem Fahren (AD); und/oder
Bereitstellen (S116d) einer Warnanzeige des Zielfahrzeugs (120) an eine Benutzeroberfläche des Ego-Fahrzeugs (110).

12. System, das eine elektronische Steuereinheit (200) zum Erkennen eines Zielfahrzeugs (120) ohne V2V-(Vehicel-to-Vehicle)-Fähigkeit, und eine Verkehrsinformationssammelzentrale umfasst, wobei die elektronische Steuereinheit (200) Folgendes umfasst:
ein Erhaltungsmodul (210a), konfiguriert zum Erhalten von Sensordaten von mindestens einem Bordsensor (250) eines Ego-Fahrzeugs (110), wobei die Sensordaten das Vorhandensein des Zielfahrzeugs (120) innerhalb des Erfassungsbereichs des mindestens einen Bordsensors (250) anzeigen;
ein Feststellungsmodul (210b), konfiguriert zum Feststellen, dass das Zielfahrzeug (120) nicht V2V-fähig ist, durch Vergleichen der Sensordaten mit Ausgangsdaten von einem V2V-System (240) des Ego-Fahrzeugs (110);
ein weiteres Feststellungsmodul (210c), konfiguriert zum Feststellen, auf der Basis der Sensordaten und der aktuellen Positionsdaten des Ego-Fahrzeugs (110), von Fusionsdaten, die mindestens eines von aktueller Position, aktueller Richtung und aktueller Geschwindigkeit des Zielfahrzeugs (120) darstellen; und
ein Sendemodul (210d), konfiguriert zum drahtlosen Senden der Fusionsdaten des Zielfahrzeugs (120) zu der Verkehrsinformationssammelzentrale,
ein Empfangsmodul (210e), konfiguriert zum drahtlosen Empfangen von Kartendaten von der Verkehrsinformationssammelzentrale (300), wobei die Kartendaten Positionsinformationen des Zielfahrzeugs (120) umfassen, wobei die Verkehrsinformationssammelzentrale zum Berechnen der Positionsdaten des Zielfahrzeugs (120) auf der Basis der Fusionsdaten wie drahtlos von der elektronischen Steuereinheit (200) gesendet konfiguriert ist.

## Revendications

1. Procédé de détection d'un véhicule cible (120) sans capabilité de véhicule à véhicule, V2V, le procédé comprenant les étapes suivantes réalisées par une unité de commande électronique (200) d'un véhicule Ego :
l'obtention (S102) de données de capteur à partir d'au moins un capteur embarqué (250) du véhicule Ego (110), les données de capteur indiquant la présence du véhicule cible (120) en-deçà d'une portée de détection de l'au moins un capteur embarqué (250) ;
la détermination (S104) que le véhicule cible (120) n'a pas de capabilité V2V en comparant les données de capteur à des données de sortie d'un système V2V (240) du véhicule Ego (110) ;
la détermination (S106), en fonction des données de capteur et de données de positionnement actuel du véhicule Ego (110), de données de fusion représentant au moins une position actuelle, une direction actuelle et/ou une vitesse actuelle du véhicule cible (120) ;
la transmission en mode sans fil (S108) des données de fusion du véhicule cible (120) à un centre de collecte d'informations routières (300) ; et
la réception en mode sans fil (S110) de données cartographiques à partir du centre de collecte d'informations routières (300), les données cartographiques comprenant des informations de positionnement du véhicule cible (120), les données de positionnement du véhicule cible (120) étant calculées par le centre de collecte d'informations routières (300) en fonction des données de fusion transmises sans fil par l'unité de commande électronique (200).

2. Procédé selon la revendication 1, dans lequel les données de fusion sont transmises en mode sans fil à l'aide du système V2V (240) à un autre véhicule (110') comprenant son propre système V2V (240').

3. Procédé selon la revendication 1, dans lequel les données de fusion sont transmises en mode sans fil à l'aide d'une technologie radio de réseau cellulaire ou d'une technologie radio de réseau local sans fil au centre de collecte d'informations routières (300) et, éventuellement, à un autre véhicule (120 pi) sans capabilité V2V.

4. Procédé selon la revendication 1, dans lequel les données de positionnement actuel du véhicule Ego (110) sont des données de système de positionnement global, GPS, et dans lequel les données de fusion comprennent des données GPS représentant la position actuelle du véhicule cible (120).

5. Procédé selon la revendication 1, dans lequel les données de capteur sont utilisées comme entrée dans un classificateur d'objets qui classe le véhicule cible (120) dans une classe d'objets cibles sélectionnée parmi un ensemble de classes d'objets cibles, chacune d'elles se voyant associer sa propre étiquette, et dans lequel les données de fusion comprennent l'étiquette de la classe d'objets cibles.

6. Procédé selon la revendication 1, dans lequel les données de capteur sont obtenues sous forme de données de capteur combinées provenant d'au moins deux capteurs embarqués (250) de types différents.

7. Procédé selon la revendication 1, dans lequel l'au moins un capteur embarqué (250) est un capteur à base de radar, un capteur à base de caméra, un capteur à base de détection et de télémétrie par la lumière ou un capteur à base de radio à ultra haute fréquence.

8. Procédé selon la revendication 1, dans lequel les données de positionnement du véhicule Ego (110) comprennent au moins une position actuelle, une direction actuelle et/ou une vitesse actuelle du véhicule Ego (110).

9. Procédé selon la revendication 1, comprenant en outre :
la réception en mode sans fil (S112) de données de fusion d'un autre véhicule cible (120') à partir d'un autre véhicule (110').

10. Procédé selon la revendication 1, comprenant en outre :
la fourniture (S114) des données de fusion en tant qu'entrée dans au moins un système de commande de véhicule (260) ; et
la réalisation (S116) d'une commande de véhicule à l'aide de l'au moins un système de commande de véhicule (260) et en fonction des données de fusion.

11. Procédé selon la revendication 11, dans lequel la réalisation d'une commande de véhicule comprend au moins :
la réalisation (S116a) d'une commande de régulateur de vitesse adaptatif (ACC) ;
la réalisation (S116b) d'un freinage d'urgence automatique (AEB) ;
la réalisation (S116c) d'une conduite autonome (AD) ; et/ou
la fourniture (S116d) d'une indication d'avertissement du véhicule cible (120) à une interface utilisateur du véhicule Ego (110).

12. Système comprenant une unité de commande électronique (200) pour la détection d'un véhicule cible (120) sans capabilité de véhicule à véhicule, V2V, et un centre de collecte d'informations routières, l'unité de commande électronique (200) comprenant :
un module d'obtention (210a) configuré pour obtenir des données de capteur à partir d'au moins un capteur embarqué (250) d'un véhicule Ego (110), les données de capteur indiquant la présence du véhicule cible (120) en-deçà d'une portée de détection de l'au moins un capteur embarqué (250) ;
un module de détermination (210b) configuré pour déterminer que le véhicule cible (120) n'a pas de capabilité V2V en comparant les données de capteur à des données de sortie d'un système V2V (240) du véhicule Ego (110) ;
un autre module de détermination (210c) configuré pour déterminer, en fonction des données de capteur et des données de positionnement actuel du véhicule Ego (110), des données de fusion représentant au moins une position actuelle, une direction actuelle et/ou une vitesse actuelle du véhicule cible (120) ; et
un module de transmission (210d) configuré pour transmettre en mode sans fil les données de fusion du véhicule cible (120) au centre de collecte d'informations routières,
un module de réception (210e) configuré pour recevoir en mode sans fil des données cartographiques à partir du centre de collecte d'informations routières (300), les données cartographiques comprenant des informations de positionnement du véhicule cible (120), dans lequel le centre de collecte d'informations routières est configuré pour calculer les données de positionnement du véhicule cible (120) en fonction des données de fusion transmises en mode sans fil par l'unité de commande électronique (200).
